# EUROPEAN PATENT APPLICATION

(11) **EP 1 515 079 A2**
(43) Date of publication of application: **16.03.2005**
(21) Application number: 04000440.0
(22) Date of filing: 12.01.2004
(51) Int. Cl.: F17C 9/00

(54) **Device and method for heating hydrogen storage canister**

(30) Priority: 12.09.2003 CN 03157061
(71) Applicant: Asia Pacific Fuel Cell Technologies, Ltd., Chunan, Miaoli 350 (TW)
(72) Inventor: Yang,Jefferson, YS, Asia Pacific Fuel Cell, Chunan Miaoli 350 (TW); Li, Yingjeng, James, Asia Pacific Fuel Cell, Chunan Miaoli 350 (TW)
(74) Representative: Goddar, Heinz J., Dr.

(57) **Abstract**

A device for heating hydrogen storage canister includes a canister containing chamber for accommodation of at least one hydrogen storage canister, a catalyst bed arranged in the canister containing chamber for catalysis. A blowing device provides an air flow through an air flow leading pipe to a nozzle section which is connected with a heating gas drawing pipe to the catalyst bed. A heating fuel storage tank supplies heating fuel which is conveyed to the nozzle section through a heating fuel supplying pipeline, a coiled pipe and a heating fuel conveying pipe in sequence. When the air flow flows through the nozzle section, the heating fuel is drawn into the nozzle section to mix with the air flow, forming a heating gas. The heating gas is atomized by the nozzle section and flows to the catalyst bed where the heating gas is catalyzed to burn to generate a hot gas to heat the hydrogen storage canister.

## Description

### BACKGROUND OF THE INVENTION

### 1. Field of the Invention

The present invention relates generally to a heating technique of hydrogen storage canister, and in particular to a method for heating up hydrogen storage canister to discharge hydrogen. The present invention also relates to a device for performing the method.

### 2. Description of the Prior Art

A fuel cell system is a power-generating unit that generates electrical power energy through electrochemical reaction of hydrogen and oxygen. To perform electrochemical reaction, hydrogen gas and air are separately conveyed to the fuel cell system via hydrogen gas passage and air passage.

Currently, a variety of ways are available for storage of hydrogen. Hydrogen can be stored in compressed gas form as compressing hydrogen, in liquid state as liquid hydrogen or in hydride form as metal hydride. Although compressed hydrogen has high gravimetric density of hydrogen, compressing hydrogen is an expensive process and the compressed hydrogen gas still occupies a great amount of space. In addition, the high pressure of compressed hydrogen is adverse to operation safety. Similarly, liquid hydrogen has high density. However, liquidization of hydrogen is a high energy consumption process. Moreover, because liquid hydrogen must be stored in a heat insulating storage tank, it is more economical and suitable to use liquid hydrogen in a system with a large storage tank. In most applications, hydride form is the most feasible way for storing hydrogen economically. An example is the compact hydrogen storage of electrical vehicle.

Metal hydride is formed by metallic material commonly referred to as hydrogen storage alloy which is capable to adsorb and desorb hydrogen. There are a variety of metal hydrides available. The charging/discharging pressure and temperature depend on the kind of metal hydride used. Also, the hydrogen storage capacity of metal hydride, i.e. the weight or volume of hydrogen that a unit weight of metal hydride can adsorb, varies from kind to kind. The conventional metal hydrides include lanthanum-nickel alloy (LaNi), iron-titanium alloy (FeTi) and magnesium (Mg) alloy, among which iron-titanium alloy is most commonly used. Some properties of iron-titanium alloy, including the hydrogen pressure, hydrogen flux and unit weight, make the iron-titanium alloy comparatively more suitable to be used in, for example, electrical vehicle than others.

The hydrogen storage capacity of magnesium alloy is larger than that of lanthanum-nickel alloy or iron-titanium alloy. In other words, for the same unit weight of alloy, magnesium alloy can store a larger amount of hydrogen than lanthanum-nickel alloy or iron-titanium alloy. However, magnesium alloy possesses a defect in practical use. Magnesium alloy is able to release a high flux of hydrogen only when the temperature is high enough e.g. at 200~300. Therefore, it is not appropriate and inefficient to use magnesium alloy in a system that does not comprise a powerful heating device to heat up the magnesium alloy.

Generally, it is convenient and safe to use hydrogen storage alloy for storage of hydrogen in a fuel cell system. However, it should be noted that the ability of the hydrogen storage alloy to charge and discharge hydrogen directly affects the performance of the fuel cell system. Desorption of hydrogen is an endothermic process, and therefore, during discharging, the hydrogen storage alloy absorbs heat and causes a drop in temperature. The decrease of temperature in turn slows down the release of hydrogen from the hydrogen storage alloy. Therefore, to maintain a steady discharging rate or to speed up the discharging of hydrogen at high performance, it is required to properly heat up the hydrogen storage alloy.

The conventional techniques for heating up the hydrogen storage alloy to discharge hydrogen include heating by an electrical heater or by the heat waste recirculated from the engine or the fuel cell system. In that cases, the fuel cell system is either equipped with a power supply for powering the electrical heater, or alternatively, with a heat waste recirculator for utilizing of the heat waste. Both of the techniques are limited to use in some applications. Practically, the use of the electrical heater consumes a substantial amount of power and raises the operation cost. Besides, the heating rate is not fast enough. The heating devices currently available are not capable to heat up rapidly to a high temperature. On the other hand, the temperature of the heat waste from the proton exchange membrane fuel cell system is usually below 100 which is not hot enough for heating up the magnesium alloy based hydrogen storage alloy.

### SUMMARY OF THE INVENTION

Thus, a primary object of the present invention is to provide a heating device for heating hydrogen storage canisters made of metal hydride, such that the hydrogen storage canisters are rapidly heated up to release hydrogen at discharging.

Another object of the present invention is to provide a device for providing heat to hydrogen storage canisters by burning a heating fuel. The technique can be applied in various fields and in particularly when heating by conventional ways e.g. electrical heater is not applicable.

A further object of the present invention is to provide a high performance heating device for heating hydrogen storage canisters. The heating device generates heat rapidly by catalyzing the combustion of methanol in a catalyst bed, such that the hydrogen storage canisters contained in a canister containing chamber can be heated efficiently in short time.

A yet further object of the present invention is to provide a method for heating hydrogen storage canisters. Air and methanol are conveyed smoothly and mixed efficiently, and combusted to produce sufficient heat to raise the temperature of the hydrogen storage canisters within a short time.

To achieve the above objects, in accordance with the present invention, there is provided a device and method for heating hydrogen storage canister. The device includes a canister containing chamber for accommodation of at least one hydrogen storage canister, a catalyst bed arranged in the canister containing chamber for catalysis, a blowing device for providing an air flow through an air flow leading pipe to a nozzle section which is connected with a heating gas drawing pipe to the catalyst bed, and a heating fuel storage tank for storage of a heating fuel which is conveyed to the nozzle section through a heating fuel supplying pipeline, a coiled pipe and a heating fuel supplying conduit in sequence. When air flow flows through the nozzle section, the heating fuel is drawn into the nozzle section to mix with the air flow, forming the heating gas. The heating gas is atomized by the nozzle section and flows to the catalyst bed where the heating gas is catalyzed to bum to generate a hot gas to heat the hydrogen storage canister.

### BRIEF DESCRIPTION OF THE DRAWINGS

The present invention will be apparent to those skilled in the art by reading the following description of preferred embodiments thereof, with reference to the attached drawings, in which:

**Figure 1** is a schematic view showing an arrangement of the components of a device for heating hydrogen storage canisters in accordance with a preferred embodiment of the present invention; and

**Figure 2** is a flowchart showing a method of heating hydrogen storage canister in accordance with the present invention.

### DETAILED DESCRIPTION OF THE PREFERRED EMBODIMENT

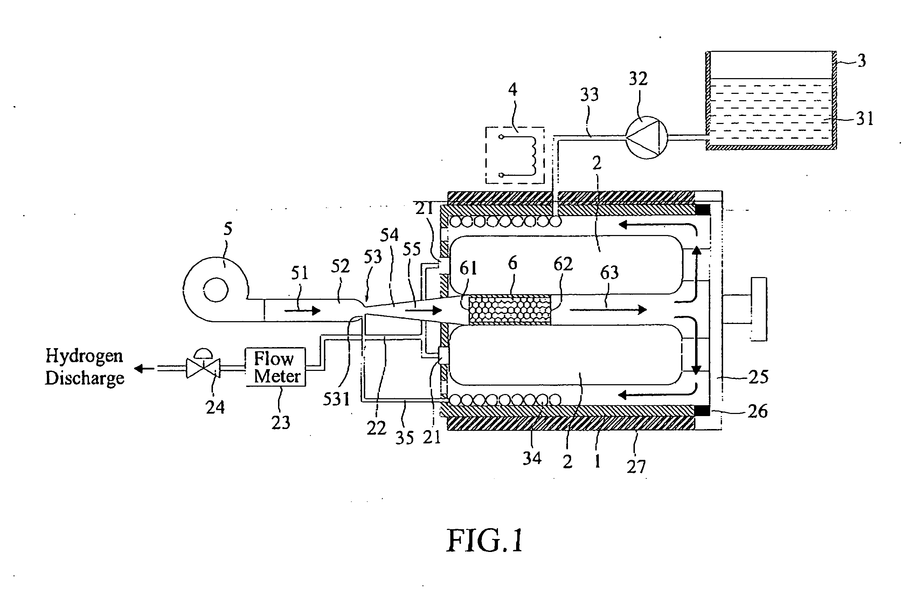

With reference to the drawings and in particular to **Figure 1**, a device for heating hydrogen storage canisters in accordance with a preferred embodiment of the present invention is shown. The heating device comprises a canister containing chamber **1** that is formed with an internal space for accommodation of e.g. two hydrogen storage canisters **2** therein. Each hydrogen storage canister **2** is coupled to one end of a hydrogen supplying pipeline **22** by means of a connecting member **21**. The connecting member **21** secures the connection between the hydrogen storage canister **2** and the hydrogen supplying pipeline **22** by means of conventional linkage such as engagement, fastening, screwing or pressing.

The hydrogen supplying pipeline **22** comprises a flow meter **23** for measuring a flow rate of hydrogen flowing from the hydrogen storage canisters **2,** and a pressure regulating valve **24** for regulating the pressure of hydrogen released from the hydrogen supplying pipeline **22.**

The other end of the canister containing chamber **1** is covered by a cover **25** to form a closed end. When hydrogen in the hydrogen storage canister **2** is used up, the cover **25** is removed such that the hydrogen storage canister **2** can be dismounted and taken out from the canister containing chamber **1**, and replaced with a new hydrogen storage canister **2**. A packing ring **26** is sandwiched between the cover **25** and the canister containing chamber **1**. Moreover, a heat insulating layer **27** may be formed on the outer surface of the canister containing chamber **1** to keep the temperature of the canister containing chamber **1**.

The heating device also comprises a heating fuel storage tank **3** for storage of a heating fuel **31** such as methanol. The heating fuel **31** is supplied to a heating fuel supplying pipeline **33** by a pump **32**. A coiled pipe **34** winds around an inner surface of the canister containing chamber **1**. One end of the coiled pipe **34** is connected to the heating fuel supplying pipeline **33** for conveying the heating fuel **31** therefrom.

Preferably, the heating fuel supplying pipeline **33** is equipped with a pre-heating device **4** at a section preceding the canister containing chamber **1.** The pre-heating device **4** may be an electrical heater. By means of the pre-heating device **4**, the heating fuel **31** supplied by the heating fuel storage tank **3** is preheated when it flows through the heating fuel supplying pipeline **33** to the coiled pipe **34**.

Also, the heating device **1** comprises a blowing device **5** for supplying an air flow **51**. An outflow end of the blowing device **5** is connected to an inflow end of a nozzle section **53** via an air flow leading pipe **52** to convey the air flow **51** to the nozzle section **53**. Then, the air flow **51** sprays out from an outflow end of the nozzle section **53** to a heating gas drawing pipe **54** which is communicated with a heating gas inflow end **61** of a catalyst bed **6**. The catalyst bed **6** is arranged in the internal space of the canister containing chamber **1**. In the embodiment, the catalyst bed **6** is disposed between two hydrogen storage canisters **2**.

The nozzle section **53** is also connected with a heating fuel inlet **531** which is communicated with a heating fuel supplying conduit **35**. The heating fuel supplying conduit **35** is connected with the coiled pipe **34** connecting to the heating fuel pipeline **33**.

Because the dimension of the passage of the nozzle section **53** is smaller than that of the air flow leading pipe **52**, when air flow **51** flows from the air flow leading pipe **52** to the nozzle section, it has a pressure drop at the nozzle section **53**. Thereby, the heating fuel **31** in the heating fuel supplying conduit **35** is sucked to the nozzle section **53**. Subsequently, the heating fuel **31** is mixed with the air flow and atomized to form a heating gas **55**.

The heating gas **55** is conveyed through the heating gas drawing pipe **54** to the heating gas inflow end **61** of the catalyst bed **6**. The heating gas **55**, which comprises the heating fuel and air, is catalyzed by the catalyst bed **6** to combust and generate a hot gas **63** that flows around the internal space of the canister containing chamber **1**. The canister containing chamber **1** is provided with at least one through hole **11** serving as a hot gas guiding outlet for the hot gas **63**. Thereby, the hydrogen storage canisters **2** contained in the canister containing chamber **1** is heated. Moreover, when the hot gas **63** flows through the gap between the hydrogen storage canisters **2** and the inner surface of the canister containing chamber **1**, it heats up the heating fuel **31** in the coiled pipe **34**. Accordingly, the heating fuel **31** such as methanol is completely vaporized in the coiled pipe **34.**

The canister containing chamber **1** may comprise a hot gas recirculating device **7** connected to the through hole **11** of the canister containing chamber **1** via a hot gas recirculating pipeline **71** for reuse of hot gas that may be incompletely burnt or for utilization of heat waste. The heat waste may also be further processed to remove the incompletely burnt substances thereof.

Moreover, the canister containing chamber **1** may further comprise an exhausted gas processing device **8** for processing the hot gas from the hot gas recirculating device and removing the incompletely burnt substances that contain in the hot gas. The exhausted gas processing device is similar to the catalyst converter of a vehicle and able to reduce pollution.

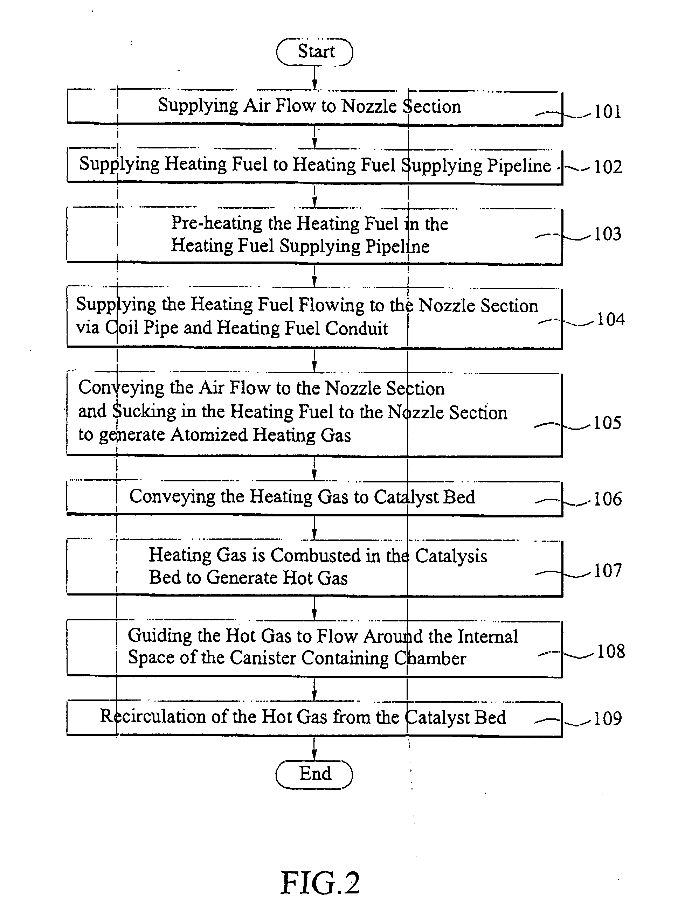

Please refer to **Figure 2** which is a flowchart showing a method of heating hydrogen storage canister **2** based on the above-mentioned arrangement. Firstly, air is drawn in by the blowing device **5** to generate an air flow **51** which is conveyed to the nozzle section **53** via the air flow leading pipe **52** in step **101**. Meanwhile, the pump **32** draws the heating fuel **31** such as methanol in the heating fuel storage tank **3** into the heating fuel supplying pipeline **33** in step **102.** In step **103,** the heating fuel **31** in the heating fuel supplying pipeline **33** is preheated by the pre-heating device **4.**

Then, the heating fuel **31** flows through the coiled pipe **34** and the heating fuel supplying conduit **35** to the heating fuel inlet **531** in step **104.** When flowing through the coiled pipe **34**, the heating fuel **31** is heated by the hot gas **63** generated by the catalyst bed **6** in the canister containing chamber **1** and vaporized.

In step **105,** the air flow **51** flows through the nozzle section **53** and draws in the heating fuel **31** from the heating fuel inlet **531.** The air flow **51** is mixed with the heating fuel **31** and atomized by the nozzle section **53** to form a heating gas **55**. In step **106**, the heating gas **55** is conveyed to the catalyst bed **6**. Catalyzed by the catalyst bed **6**, the heating gas **55** is combusted in the catalyst bed **6** to generate a hot gas **63** in step **107**.

Subsequently, the hot gas **63** flows around the internal space of the canister containing chamber **1** and heats up the hydrogen storage canisters **2** in step **108**. Finally, the hot gas is exhausted and re-circulated in step **109**.

From the described embodiment, it is noted that the device and method for heating the hydrogen storage canisters are novel and very practical. Although the present invention has been described with reference to the preferred embodiment thereof, it is apparent to those skilled in the art that a variety of modifications and changes may be made without departing from the scope of the present invention which is intended to be defined by the appended claims.

## Claims

1. A device for heating at least one hydrogen storage canister to discharge hydrogen, comprising:
a canister containing chamber with an inner space for accommodating the hydrogen storage canister therein;
a catalyst bed, arranged in the inner space of the canister containing chamber, having a heating gas inflow end and a heating gas outflow end;
a blowing device, for providing an air flow into an air flow leading pipe;
a nozzle section, which has an inflow end in communication with the air flow leading pipe for conveying the air flow into the nozzle section and an outflow end in communication with a heating gas drawing pipe connecting to the heating gas inflow end of the catalyst bed;
a heating fuel storage tank for supplying a heating fuel via a heating fuel supplying pipeline to the nozzle section;
wherein when the air flow flows through the nozzle section, the heating fuel in the heating fuel supplying pipeline is sucked into the nozzle section to mix with the air flow forming an atomized heating gas, the atomized heating gas being further supplied into the catalyst bed via the heating gas drawing pipe to generate a hot gas, so that the hydrogen storage canister contained in the canister containing chamber is heated to discharge hydrogen into a hydrogen supplying pipeline.

2. The device as claimed in Claim 1, wherein the heating fuel is methanol.

3. The device as claimed in Claim 1, wherein the heating fuel supplying pipeline is further equipped with a pre-heating device for pre-heating the heating fuel in the fuel supplying pipeline before supplying to the nozzle section.

4. The device as claimed in Claim 1, wherein the canister containing chamber is further provided with a coiled pipe around an inner surface of the canister containing chamber, the coiled pipe being connected between the heating fuel supplying pipeline and the nozzle section for conveying the heating fuel from the heating fuel supplying pipeline to the nozzle section, when flowing through the coiled pipe, the heating fuel being heated by the hot gas generated in the catalyst bed.

5. The device as claimed in Claim 1, wherein the canister containing chamber is further equipped with a heat insulating layer surrounding an outer surface of the canister containing chamber.

6. The device as claimed in Claim 1, wherein the hydrogen supplying pipeline comprises a pressure regulating valve for regulating a pressure of the discharged hydrogen.

7. The device as claimed in Claim 1, wherein the hydrogen supplying pipeline comprises a flow meter for measuring a flow rate of the discharged hydrogen.

8. The device as claimed in Claim 1, wherein in the canister containing chamber comprises at least one through hole serving as a hot gas guiding outlet for the hot gas.

9. The device as claimed in Claim 8, further comprising a hot gas recirculating device connected to the through hole of the canister containing chamber via a hot gas recirculating pipeline for reuse of the hot gas.

10. A method for heating at least one hydrogen storage canister accommodated in a canister containing chamber to discharge hydrogen of the hydrogen storage canister, comprising:
(a) supplying an air flow to a nozzle section via an air flow leading pipe;
(b) supplying a heating fuel to a heating fuel supplying pipeline and then conveying the heating fuel from the heating fuel supplying pipeline to the nozzle section;
(c) sucking the heating fuel from the heating fuel supplying pipeline into the nozzle section to form an atomized heating gas when the air flow flows through the nozzle section;
(d) conveying the atomized heating gas to the catalyst bed which catalyzes the heating gas to combust and generate a hot gas; and
(e) conveying the hot gas into the canister containing chamber to heat up the hydrogen storage canister.

11. The method as claimed in Claim 10, wherein the heating fuel is methanol.

12. The method as claimed in Claim 10, wherein step (b) further comprises a step of pre-heating the heating fuel in the heating fuel supplying pipeline.

13. The method as claimed in Claim 10, wherein in step (b), the heating fuel supplied to the heating fuel supplying pipeline is further conveyed to a coiled pipe around an inner surface of the canister containing chamber before conveying to the heating fuel supplying conduit, such that the heating fuel is heated by the hot gas generated by the catalyst bed when flowing through the coiled pipe.

14. The method as claimed in Claim 10, wherein step (d) further comprises a step of recirculation of the hot gas generated by the catalyst bed.

15. The method as claimed in Claim 10, wherein step (d) further comprises a step of processing the hot gas to remove incompletely burnt substances from the catalyst bed.
